# EUROPEAN PATENT SPECIFICATION

(11) **EP 4 278 101 B1**
(45) Date of publication and mention of the grant of the patent: **01.04.2026**
(21) Application number: 22739260.2
(22) Date of filing: 12.01.2022
(51) Int. Cl.: F16B 13/02, F16B 13/00, F16B 25/10, F16B 15/00

(54) **WALL ANCHOR**
WANDANKER
ANCRAGE MURAL

(30) Priority: 16.01.2021 IL 28020621
(43) Date of publication of application: 22.11.2023
(73) Proprietor: Tov, Yoav Shlomo, 4294000 Kfar Yedidya (IL)
(72) Inventor: Tov, Yoav Shlomo, 4294000 Kfar Yedidya (IL)
(74) Representative: ABG Intellectual Property Law, S.L.
(86) International application number: PCT/IL2022/050050
(87) International publication number: WO 2022/153302

(56) References cited:
- AU-A1- 2011 202 674
- DE-A1- 1 625 383
- RU-C1- 2 120 067
- US-A- 4 322 194
- US-A- 5 730 570
- US-B1- 6 361 258

## Description

### FIELD OF THE INVENTION

The present invention relates in general to wall anchors, specifically to self-penetrating wall anchors suitable for anchoring objects to surfaces and walls made of hard materials.

### BACKGROUND OF THE INVENTION

Securing an object to a wall can be done by any number of means, one of the simplest methods is by hammering a nail into the wall.

Standard nails are easy to use but have several caveats: (1) they provide little support capabilities when attempting to hang heavy objects, (2) they provide little resistance towards direct backwards pulling of the nail from the wall, and (3) lack a locking mechanism that prevents the secured object being released from the nail by mere lifting or a wiggle.

Thus, nails are limited in use mainly for hanging light-weighted objects, such as pictures, and in which the pulling force applied on the nail is "downwards" (Bending force) and not "backwards" (Pulling force), and never for high-value objects, even if light.

A fruitful field of invention is anchoring apparatuses in which the said pulling-force resistance ("backwards") is enhanced. Yet such a solution is almost exclusively obtained by increasing the normal force applied by the anchor to the wall, such as with expanding wall anchors; or moving part that locks the anchor into or behind the wall.

Concordantly, when heavy or large objects need to be secured to a wall, screws, and wall anchors, such as expansion fasteners, are commonly used. A classic expansion fastener provides a resilient lining for a bore in the wall into which the screw is driven to secure an item to the wall. Once a screw is driven into the expansion fastener, the fastener's section located inside the wall expands thereby anchoring the fastener and the screw in place and preventing extraction/pulling of the screw and fastener from the wall.

Expanding wall anchors, such as expansion fasteners are commonly pushed into a pre-drilled bore. Less common in use are fasteners hammered/screwed directly into the hard wall, before a second stage of anchoring takes place - to provide the added support.

Two main wall types exist: solid-hard walls, made of, E.g. concrete and bricks, and soft-thin walls, made of, e.g., plasterboards, sheetrock, drywall, plywood and other relatively thin or soft materials.

Examples of self-penetrating fasteners for soft-walls are disclosed in GB 2349932, US 6,371,706, US 4,322,194, US 2002/0150442, US 4,283,986 and US 5,037,257.

RU 2 120 067 C1 relates to a fastener for connection of an element to a wooden structure.

An unmet-need exists for a self-penetrating wall anchor that can be hammered directly into a hard-wall without any predrilling, yet that would avoid the caveats of the common nail described above.

### SUMMARY OF INVENTION

In a first aspect, the present invention provides a self-penetrating wall anchor (100) for anchoring an article to a hard-surface such as a hard-wall, said wall anchor (100) comprising a rigid body having: (i) an outer wall(s) (101); (ii) a piercing distal-end (103) for penetrating into said wall without prior drilling; and (iii) an open proximal-end (104) leading to an essentially axial threaded recess (102) for receiving a screw.

In a second aspect, the present invention provides a method for anchoring an object to a hard-wall, the method comprising the steps of: (a) hammering the self-penetrating wall anchor (100) of the invention into said wall; and (b) screwing a screw into said wall anchor (100), thereby anchoring said object to said wall.

### BRIEF DESCRIPTION OF DRAWINGS

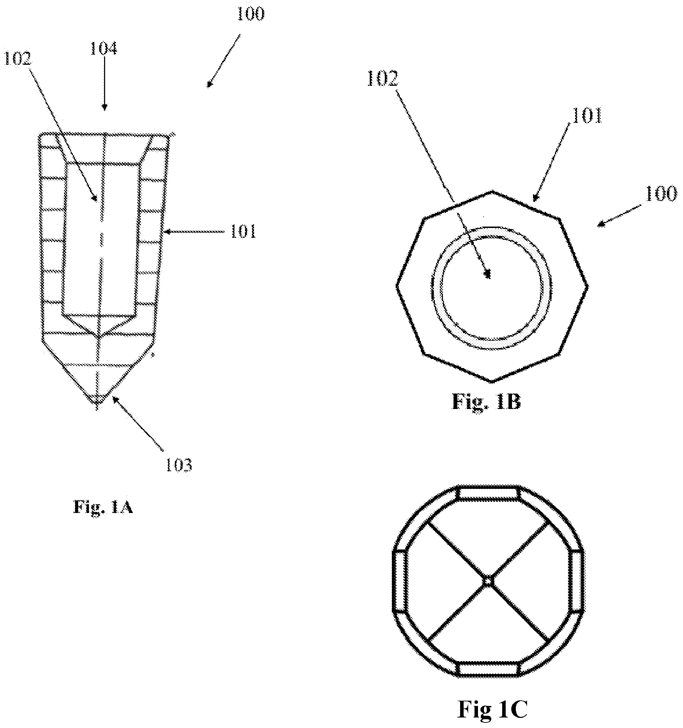

**Figs. 1A-1C** are illustrations of a self-penetrating wall anchor according to some embodiments of the invention: **Fig. 1A** is a cross-sectional side-view; and **Fig. 1B** is an upper-view. **Fig. 1C** is a bottom view, looking at the piercing distal-end (103) of some embodiments of the invention. Four faces of the piercing distal end are visible, as well as eight faces of the body portion: four flat and four rounded.

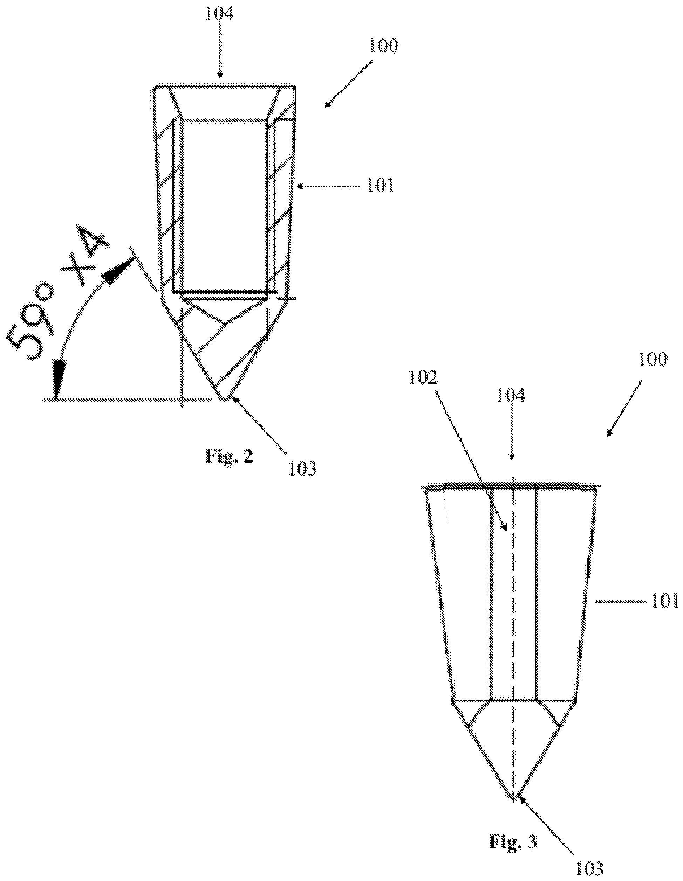

**Fig. 2** is an illustration of a cross-sectional side-view of the anchor (100) showing a possible angle of the self-penetrating wall anchor's piercing head. alpha (=1~89).
**Fig. 3** is an illustration of another self-penetrating wall anchor according to some embodiments of the invention.

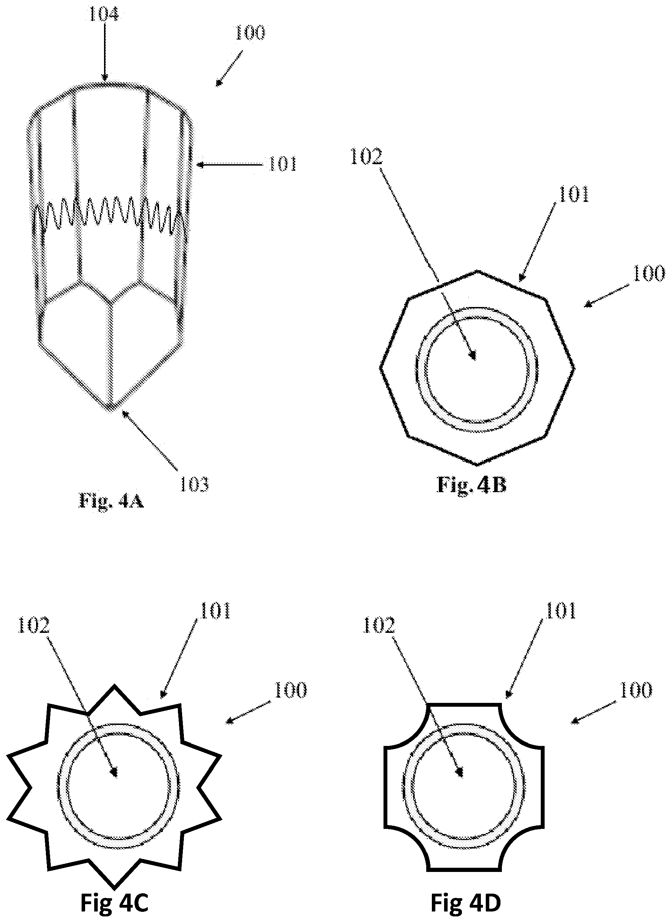

**Figs. 4A-4D** are additional illustrations of a simple self-penetrating wall anchor according to some embodiments of the invention: **Fig. 4A** is a side-view showing an example of the interface between the faces of the body and the faces of the piercing head of the wall anchor. The body of the anchor in this example is polygonal-shaped **Fig. 4B** is an upper view of the wall anchor in which eight flat and symmetric faces of the outer wall are visible. **Fig. 4C** is an upper view of an example of the wall anchor in which faces are oriented to be star shaped. **Fig. 4D** is an upper view of an example of the wall anchor in which faces are asymmetrical - some are flat and some concave.

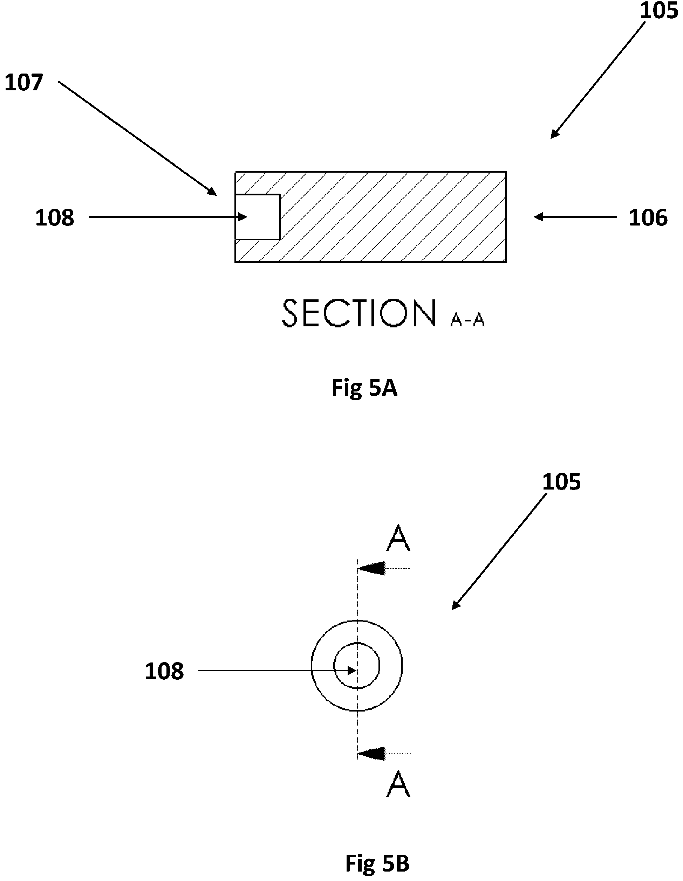

**Fig. 5A-B** are illustrations of a holder (105), in which the holder is a simple machined rod. No handles or appendages have been added. **Fig. 5A** is a cross section side view illustrating the 1^{st} blunt end (106), and the 2^{nd} cavate-including end (107) of the holder (105) as well as showing the machined cavate (108), made to place and stably hold the open proximal-end of the anchor (100). **Fig. 5B** shows the cavate-including end (107) of the holder (105) with the cavate (108).

### DETAILED DESCRIPTION OF THE INVENTION

One aspect of the present invention is an article - a wall anchor (100) - suitable for anchoring objects to a wall or a surface made of hard materials. It does not require pre-drilling for its application, but rather is hammered into the wall like a nail and thus herein described as self-penetrating.

Said wall anchor (100) of the present invention is a single component (one-piece) element; it is essentially rigid and its shape is not deformed or modified upon hammering or insertion into the wall or surface.

This is **in contrast to** many wall anchors which function is *de-facto* dependent upon a (seemingly mild) deformation (upon or after insertion into the wall or surface) which is functional in applying normal force and increases their anchoring to said surface.

Said wall anchor (100) of the present invention includes an internal bore/recess which is essentially threaded to accept and to fasten a screw. said screw may be used for fixing and securing an object / article to said wall or surface.

Said wall anchor includes a piercing tip (i.e. a piercing distal end) to penetrate the hard wall or surface.

The cross section of the external surface of said wall anchor (100) of the present invention is not circular: it includes deviations from a circle - such as in the form of faces.

In its preferred mode, said wall anchor (100) includes plain faces (101) on its external surface. For the same of an example: a hexagonal prism is a geometrical shape that could be described as having two parallel ends (faces), called bases, and sides of a prism, (also) called faces.

Despite the fact that the present invention is carved from a single but and is not separable into pieces, it may be addressed as having portions: a body/base portion - in which in some embodiments of the present invention could be described as geometrically resembling, for example, an octagonal prism.

Yet, unlike the faces in an octagonal prism (or decagonal prism for that matter), the faces of the present invention wall anchor are not necessarily parallel nor must have the same length. The said wall anchor may include any number of plain faces, between 3, 4, 5, 6, 7, 8, 9, 10 and up to a (100).

In its preferred mode, the said piercing tip (103) (i.e. a piercing distal end) also includes faces; such as that it is not cone-shaped, but rather essentially a pyramid of sorts (e.g. a tetrahedron, a pyramid, a pentagonal pyramid a hexagonal pyramid and so forth) or a form which is essentially similar to a pyramid of sorts - such as, but not limited to, a bent pyramid (essentially, a bent pyramid is a geometrical form resembling a pyramid in which the faces are not flat but curved).

The wall anchor (100) of the present invention preferably includes a portion of the internal bore/recess (102) which is not threaded - distal from the tip (103) such as that the threaded portion would not reach said piercing distal-end (103) and that would be subjected to distortion when said wall anchor (100) is hammered into said wall or surface.

Thus by "essentially axial threaded recess" is taken to mean that at least a portion of the recess is threaded, whereas a portion of the recess may be without threading.

In our experimental work this was for example an approximately 1mm un-threaded portion for a 2cm long wall anchor article/apparatus.

In some examples the said axial threaded recess reaches all the way to the ((104), open, proximal) tip of the anchor. This is contrary to, e.g., the anchor illustrated in Fig. 2, in which the axial threaded recess (102) does not reach all the way to the tip of the anchor.

The present invention thus provides a self-penetrating wall anchor (100) that eliminates the need for predrilling while providing sufficient anchoring support. The wall anchor (100) of the invention is designed to be hammered directly into the wall without any predrilling, thereby eliminating the need for predrilling a bore into the wall prior to its insertion therein- the user simply hammers the self-penetrating wall anchor (100) of the invention into the wall without any drilling. Once the anchor (100) is inserted into the wall, a screw can be screwed therein to anchor an object to the wall.

Accordingly, in a first aspect the present invention provides a self-penetrating wall anchor (100) for anchoring an article to a hard-wall, said wall anchor (100) comprising a rigid body that does not change its shape when a screw is screwed in, the body having: (i) an outer shell/wall(s) (101); (ii) a piercing distal-end (103) for penetrating into said wall without requiring and prior drilling into the wall; and (iii) an open proximal-end (104) leading to an essentially axial threaded recess (102) for receiving a screw.

A second aspect of the present invention is a method for anchoring an object to a hard-wall, comprising the steps of: (a) hammering a self-penetrating wall anchor (100) which is an article as described above; and (b) screwing a screw into said internal bore/recess which is threaded to accept and to fasten a screw. In specific embodiments of this method, the self-penetrating wall anchor (100) is held by a designated holder (105) that assists in holding the anchor (100) against the wall while reducing the risk of hammering the user's fingers.

In certain embodiments, the wall anchor (100) of the present invention is characterized by having a conic-like shape, i.e. reducing in diameter from the non-piercing end towards the piercing distal-end (103), such as that it may be described not as rod-shaped but rather as essentially conical in its profile, albeit in a moderate angle. This attribute is important for the anchoring strength: comparison of a non- 'reducing in diameter' wall (rod-shaped) anchor of the present invention, in which the main portion of the anchor is rod-shaped, with a conical-shaped anchor demonstrated relatively lesser anchoring of the rod-shaped anchor compared to the preferred 'reducing in diameter' (conic-shaped) construction, probably due to a weaker interface with the wall surface.

It may be hypothesized that a weaker interface with the wall surface of the described non-preferable anchor with an essentially rod-shaped main portion is since either (I) due to tolerance/variation in exact width in manufacture along the anchor, which in a rod-shaped anchor translates to a lesser interface of the anchor and the wall is reduced, or (II) erosion of the hard wall internal surface interacting with the anchor upon hammering which is less evident in the preferable 'reducing in diameter' anchor - in which upon hammering into the wall any point along the anchor interacting with the wall internal surface has a progressively larger diameter, and maintains a high normal force. Thus, the preferable 'reducing in diameter' anchor avoids this cavate.

The term "normal force" used herein refers to the contact force (F_{N}) described in mechanics.

In order to describe the present invention and its functionality, some comparison to nails, screws and screw anchors are relevant: Probably one of the simplest means of securing an object to a wall is by hammering a nail into the wall. In home appliance - standard nails have several caveats: (1) they provide little support capabilities when attempting to hang heavy objects, (2) they provide little resistance towards direct backwards pulling of the nail from the wall, and (3) lack a locking mechanism that prevents the secured object being released from the nail by mere lifting or a wiggle. Therefore, nails are limited in use mainly for hanging light-weighted objects, such as pictures, and in which the pulling force applied on the nail is "downwards" (Bending force) and not "backwards" (Pulling force), and never for high-value objects, even if those are light in weight.

Screws are very useful for securing object to elastic or soft surfaces. Geometrically, a screw can be viewed as a narrow-inclined plane wrapped around a cylinder. The said wrapped plane, helically surrounding the axis of the screw is substantially potent in (carving into and) securing the screw to a soft, or elastic, surface, such as a wooden board, but is substantially inefficient in (carving into and) anchoring to non-elastic hard walls. The wall does not provide consistent normal force to a simple screw if such were to be screwed to the wall, but rather the wall would crumble adjacent to the screw thread (thus, commonly requiring insertion of a fixer/anchor into a pre-drilled bore).

An incentive for making the present invention, and a common use, relates to the fact that many people are reluctant to use a drill for anchoring small objects to house walls. A good example would be a wall-fixed stand for a remote controller. The mess created in drilling, the time spent preparing to drill as well as cleaning up, and so on, make this task unfavorable. Also, some people do not own a drill and/or are not comfortable with operating one, thereby are dependent on assistance of a professional when required to anchor an object (such as the said wall-fixed stand, or a small picture) to a wall. The present invention thus provides a self-penetrating wall anchor (100) that eliminates the need for predrilling while providing sufficient anchoring support.

Thus, hard wall, such as concreate or brick requires applying a screw anchor, which most commonly is inserted into a bore, and thus requires drilling. Some screws may be anchored directly into concreate with some efficiency, but similarly require a pre-drilled bore.

Some fasteners do not require pre-drilling, commonly those for soft walls such as dry-wall (gypsum board; made of calcium sulfate dihydrate, paper, and additives such as mica, clay, and resin). See, e.g., US 5,037,257.

Notably, known expansion fasteners relay on their expansion upon screwing a screw therein to increase the holding power (normal force) of the anchor in the wall.

Contrary to that, the present anchor (100) does not expand or change its shape once a screw is screwed in it- it merely serves as an anchoring point into which the screw can screw-on thereby securing an element to the wall.

The absence of expansion would be considered to a person of skill in the art as a substantial cavate; but experimental work performed indicated that with the material used the apparatus was applicable in this form.

A lack of any expansion or movement in the anchor (100) is counter to what is found in most if not all contemporary inventions in the field - which center on providing added support.

The state of the art may be said to be teaching away from an anchoring apparatus which does not provide added support to prevent pulling out of the anchoring apparatus, over that of a simple nail.

Indeed, the current invention in its basic form does not provide substantial support to prevent pulling out of the anchoring apparatus - but rather added simplicity: combining of a nail-insertion methodology (simple hammering) and of a screw fixing function to anchor an article to the wall or surface.

An artisan will acknowledge that a ridged nail-shaped inserted element could not function as an efficient wall anchor after screwing of a screw into an internal bore/recess: since the axial force generated by screwing the screw into an internal bore/recess would damage the interface between the nail/anchor and the support/wall, specifically in a hard wall, destroying the anchoring to the wall.

This is analogous to rotating a nail in the wall several times - which would help pull the nail out. Indeed, as far as commonly known, it is as to date an unacknowledged problem to-be-solved - 'how to screw into a rigid nail-anchor without having it turn?'.

The faces added to the external portion of the wall anchor (100) of the present invention are a solution to that question.

When experimenting with similar wall anchors which lack faces, the rotation rendered the wall anchor not functional in that context.

Generally, the faces (i.e. number of faces), their width, their orientation (with or without a slight twist) and the material (e.g., metal) from which the wall anchor (100) of the present invention is made - can and should be adapted to function: e.g., using the present invention to secure a tent with anchors to rocks or soil, or machinery to the ocean bedrock-sediment would require not only scaling size, but rather adjusting the aforementioned parameters for the hardness to the surface material (and thus the derived required hammering force) and for the relative impact that the screwing may have on the anchoring to the surface.

Said wall anchor includes a piercing tip (103) (i.e. a piercing distal end) to penetrate the hard wall or surface: the piercing distal end (103), in my hands also requires faces to function well.

The faces of the piercing distal end (103) were efficient in order to penetrate/pierce the hard-wall. A piercing distal end (103) which was completely conic was not functional to that extent.

It is worthwhile noting that cost of manufacture of the present invention- or any nail-like apparatus which includes an internal bore/recess with an axial engraving is substantially more expensive than a common screw anchor - thus receives less interest unless has added value.

Like the attributes of the faces of the wall anchor - the size and length of the wall anchor can vary according to need and designated screw.

The wall anchor of the present invention is suitable for anchoring objects to a wall or a surface made of hard materials, but is by no way limited to such a household use.

Also, an anchor of the present invention may also be used to anchor to a soft material, such as the anchor (100) depicted in Fig 4C to anchor to a sandy or clay-like sediment.

The anchor (100) of the present invention may be very useful for applications in deep-sea, mountain or space exploration - in which the cost of article-manufacture are negligible - and virtues of the present invention such as reusability, non-deformation, fixing to surface without use of a drill, and replacement of the attached element are of value.

Underwater, aerospace and to some extent mountain climbing - the use of a fixing apparatus without the need of a screw is valuable. The present invention would be useful both to provide anchor points as well as connect apparatuses such as lights or machinery to a fixed underwater position, and easily replace then when needed. Also, in these endeavors manufacture costs are a least concern.

It is acknowledged that stronger materials (e.g., Titanium, Titanium aluminide, and Carbon Steel) would also widen the spectrum of available dimensionalities in respect to use of iron: for example, (1) a thinner-longer wall anchor, (2) an anchor with wider threaded recess (102) as well as an anchor with (3) more extreme external shape (protruding star-points, such as in Fig. 4C). It is also acknowledged that material flexibility is also pertinent to such attributes.

The anchor of the present invention may be manufactured in different sizes - when used for support in household use, for example, ranging from 3 mm to 5 cm: it may be constructed such as in the working examples provided below, and may be manufactured to receive screws having any length, for examples: lengths of 0.5, 1, 1.5, 2, 2.5, 3, 3.5, 4, 4.5, 5 mm. or much more; and of any diameter, such as: 0.5, 1, 1.5, 2, 2.5, 3, 3.5, 4, 4.5, 5, 5.5 mm; or more.

For non-household use: such as an anchor in outdoor terrain - an anchor up to - for example - 10 cm in length may be relevant, and other dimensions can be scaled accordingly.

In addition, a person of skill in the art would simply know to adapt the engraving inside said axial threaded recess (102) to fit a designated screw: adjusting type (or depth; e.g. fine or wide threads, their pitch) and so forth.

Engraving/ treading common for household use may be for example M2, M2.5, M3.

A limitation in size, (e.g., the width and length as well as the width of the axial threaded recess) would correlate to the strength of the material from which the wall anchor (100) of the present invention is made; and such as not to have it break when hammered. An artisan would acknowledge the need to limit the dimensions of a wall anchor of the present invention in manufacture such as that in correlated to both the properties of the material from which it is made (as elaborated below), and the hardness of the anchoring surface.

For example, limitations for the threaded recess when using iron/steal; which are due to risk of fracturing the apparatus when hammering-in to the wall. It is acknowledged that stronger materials such as titanium or carbon fiber composites may provide for a dimensionality such as a thinner-longer wall anchor or a more extreme proportion between the overall wall anchor width and the threaded recess (102) width in a point along the wall anchor. the material flexibility is also pertinent.

The present invention may also be described as: a nail-like surface anchor (e.g.: wall anchor) comprising (i) an internal bore for fixing a screw; and (ii) an external surface comprising means, such as external non-rounded faces or protrusions, which hinder the nail-like surface anchor from turning in the wall when a screw is inserted for fixation.

Preventing the anchor from turning in the wall upon fixing a screw is key, since said turning would be detrimental to the anchoring to the wall: thus, the importance of resistance provided by said means or non-rounded faces or protrusions.

For clarity, the wall anchor (100) can be made from any suitable hard material, such as metal (with a range HRC (Hardness Rockwell C) of 40-55), steel (with a HRC range of 55-66, or more), alloy (with a HRC range of 67-70, or more), carbon fibres (with a HRC range of 20-45, or more), enforced plastic or other polymer (with a HRC range of 20-70, or more), or any combination thereof, etc. The hardness of the wall anchor (100) of the invention, namely its resistance to localized surface deformation, is defined according to need, and is at least about 40 HRC, such as in the range of 40 to 70 HRC, or more; 45 to 70 HRC; 50 to 70 HRC; 55 to 70 HRC; 60 to 70 HRC; 65 to 70 HRC; 40 to 65 HRC; 40 to 60 HRC; 40 to 55 HRC; 40 to 50 HRC; 40 to 55 HRC; 45 to 65 HRC; 50 to 60 HRC; or about 55 HRC.

Over nails - the present invention provides a locking mechanism that prevents the secured object being released from the nail/apparatus by mere lifting or a wiggle. This makes the present invention ideal for fixing small, but high value appliances - e.g. a wall-fixed stand for a remote controller.

In specific embodiments, the anchor (100) is non-deformable, meaning that it does not substantially change its shape under pressure, e.g., when hammered into the wall, and/or when a screw is screwed into it- this is in contradiction to standard expansion fasteners that expand when a screw is screwed in them to facilitate anchoring thereof.

As dependent of the material used for making the anchor, and when used for support not for home appliance: the invention may be made with a completely different ratio and dimensionality: such as very long apparatus for fixing anchors to a soft sediment.

The shape of the wall anchor (100) can vary and can preferably be conic, i.e., with a diameter that grows from the distal-end (103) to the open proximal-end (104) (illustrated in Fig. 3); as well as, alternatively, essentially even size along its length (illustrated in Figs. 1A & 2), except for the piercing distal end (103), which is narrow/pointy.

In all embodiments - the wall anchor (100) of the present invention is a single component (that is a one-piece) element; when portions of the anchor are described - specifically the body *versus* the piercing distal end (103) - it is the sides/parts of that one piece which are described.

The wall anchor (100) of the present invention does not have features to prevent it's backward pulling from the surface to which it is anchored, in contrast to most wall anchors; but it does have the added value of being reusable - when pulled out it is essentially in the same form as before and may be used again, like a common nail. Also, the screw inserted into the wall anchor may be screwed out and back in, essentially without limitation.

The anchor (100) cannot have a rounded-shaped external shell/outer wall (101), such a shape does not provide the anchoring of the invention described. Experimenting with such a form explicitly showed that the screwing of a screw to the apparatus reduces substantially its anchoring. The faces (101) provided (Fig. 4B) are essential to prevent turning of the anchor apparatus (100). More extreme faces (101) or appendages may be useful (Fig. 4C and Fig 4D are examples): as much as an apparatus with a section which is essentially star shaped (Fig. 4C) with any number of faces as described. As well as faces which are not flat - and as exemplified in Fig. 4D.

The cross section of the external surface of said wall anchor (100) includes deviations from a circle - such as faces (101), these may be with or without added projections or engravings.

The shape of the wall anchor (100) in its said distal-end (103) may have diverse pointy-end structures: such as pyramid-like shape with any geometrical polygon base, such as triangle, square, pentagon, hexagon, heptagon, octagon, etc.

Regarding the open proximal-end (104) - the wall anchor's piercing head (103) may have the same number of faces as the main portion / base portion.

The base portion may also be star-shaped, creating grooves along the anchor's (100) body from the distal-end (103) to the open proximal-end (104) thereby increasing surface contact between the anchor (100) and the wall it enters. Such a shape is of use with concordance with the surface material - for example for a non-rigid and surface - a star-shaped anchor (100) body will be useful to maximize surface area.

In certain embodiments, and to increase holding power of the anchor (100) in the wall, the outer wall(s) (101) of the anchor (100) further comprises appending features which increase it's adherence binding to the surface.

In the main embodiment of the invention - once hammered into the wall, the anchor (100) is designed to be completely inside the wall, i.e., that the edge of the open proximal-end (104) does not essentially extend outwardly from the wall. Accordingly, in certain embodiments and in order to achieve this, the open proximal-end (104) is headless, thereby enabling complete insertion thereof into the wall during hammering.

In yet other embodiments - the anchor (100) extends outward from the wall, such as the "head" of a common nail - which is wider than the body of the nail. Experiments have shown that the embodiment with no "head" are useful and functional for the household use.

In another aspect, the present invention provides a method for anchoring an object to a hard-wall using the anchor (100) of the invention, the method comprising the steps of: (a) hammering the self-penetrating wall anchor (100) of any of the embodiments above into said wall; and (b) screwing a screw into said wall anchor (100), thereby anchoring said object to said wall.

In certain embodiments, the hammering of the anchor (100) into the wall is carried out using a dedicated holding instrument - a holder (105), designed for easy and safe holding of the anchor (100) during hammering.

In one embodiments, the holder (105) has a double function: (1) to hold the anchor of the said invention in place for hammering into the said wall (as it is in some embodiments small and inapplicable to hold by hand during hammering); and (2) lining it with the anchor (which is now partially inserted into said wall) and in order to hammer at the anchor (100) further - for it to be in line with the wall (not extending outwardly) - without having the hammer hit said wall surface.

The holder (105) is preferably made of metal, such as steel, essentially in the shape of a rod, having a 1^{st} blunt end (106), and a 2^{nd} cavate-including end (107), with a machined cavate (108). said cavate (108) is machined in a shape to place and stably hold the open proximal-end (104) portion of the anchor (100) so that it may be hammered into the wall, and as in some embodiments of the anchor (such as in some embodiments for home appliance) the small size of the anchor (100) prevents holding it by hand for hammering. In specific embodiments, the shape and size of the cavate (108) are adjustable, so that a single holder (105) is suitable for holding different sized anchors (100).

As a second stage the holder (105), and specifically the holder blunt end (106), may be placed on the partially-inserted holder (100) for hammering it into the wall, and having the open proximal-end (104) portion of the anchor in line with the wall, that is to say having the holder (100) not protruding from the wall and not hammering directly at the wall.

An artesian would acknowledge that holder (105) may be made of a non-metal strong material and be cast, in contrast to being machined, to include said cavate (108). An artesian would further acknowledge the holder (105) may have handles or appendages added for convenience.

The holder (105) may therefore be simply described as a rigid caveated holder, made to for the anchor (100) of the present invention, for fixing and hammering.

It is of note, that a teaching that two elements are combined in a claimed combination is further to be understood as also allowing for a claimed combination in which the two elements are not combined with each other; but may be used alone or combined in other combinations. The excision of any disclosed element of the invention is explicitly contemplated as within the scope of the invention.

Many alterations and modifications may be made to both the anchor and the holder of the present invention, by those having ordinary skill in the art without departing from the scope of the invention. And some of such alterations do not require undue experimentation. Therefore, it must be understood that the illustrated embodiment has been set forth only for the purposes of example, and that it should not be taken as limiting the invention as defined by the following invention and its various embodiments and/or by the following claims.

For example, notwithstanding the fact that the elements of a claim are set forth below in a certain combination, it must be expressly understood that the invention includes other combinations of fewer, more or different elements, which are disclosed in above even when not initially claimed in such combinations.

An explicit example of this is the number of faces on the outer wall(s) (101): which for optimization regarding parameters such as the hardness of the wall/surface material. The strength of the metal/material from which the anchor is being made, and the like; For example: for a hard surface material with high friction properties an anchor with less extreme faces (101) (which is closer to a circle) would suffice.

The words used in this specification to describe the invention and its various embodiments are to be understood not only in the sense of their commonly defined meanings, but to include by special definition in this specification structure, material or acts beyond the scope of the commonly defined meanings. Thus, if an element can be understood in the context of this specification as including more than one meaning, then its use in a claim must be understood as being generic to all possible meanings supported by the specification and by the word itself.

The definitions of the words or elements of the following claims are, therefore, defined in this specification to include not only the combination of elements which are literally set forth, but all equivalent structure, material or acts for performing substantially the same function in substantially the same way to obtain substantially the same result. In this sense it is therefore contemplated that an equivalent substitution of two or more elements may be made for any one of the elements in the claims below or that a single element may be substituted for two or more elements in a claim. Although elements may be described above as acting in certain combinations and even initially claimed as such, it is to be expressly understood that one or more elements from a claimed combination can in some cases be excised from the combination and that the claimed combination may be directed to a sub-combination or variation of a sub-combination.

For purposes of clarity, and in no way limiting the scope of the teachings, unless otherwise indicated, all numbers expressing quantities, percentages or proportions, and other numerical values recited herein, should be interpreted as being preceded in all instances by the term "about." Accordingly, the numerical parameters recited in the present specification are approximations that may vary depending on the desired outcome. For example, each numerical parameter may be construed in light of the number of reported significant digits and by applying ordinary rounding techniques.

For purposes of clarity, where ranges were provided using example values, such as for sizes, a range with similar values is included as example.

The term "about" as used herein means that values of 10% or less above or below the indicated values are also included.

Reference in the specification to "one embodiment", "an embodiment", "another embodiment" or "certain embodiments" means that a particular feature, structure, or characteristic described in conjunction with the embodiment can be included in at least one embodiment of the invention. The appearances of the phrase "in one embodiment" in various places in the specification do not necessarily all refer to the same embodiment.

Various embodiments and aspects of the inventions will be described with reference to details discussed below, and the accompanying drawings will illustrate the various embodiments.

The term "hard-wall" as used herein refers to any wall made of hard building material(s), such as bricks, concrete, stone, autoclaved aerated concrete, and the like, contrary to a "soft-wall" that is made of soft building material(s), such as plasterboards, sheetrock, drywall and plywood.

Figs. 1A and 1B illustrate one embodiment of an anchor (100) of the invention, which has an outer surface with flat even faces, as can be seen in the upper view of the anchor (100) (Fig. 1B.) Fig. 1A, which is a cross-sectional side-view illustration of the anchor (100) shows the axial threaded recess (102) inside the anchor, the faces are not visible form this angle. As can be seen, the open proximal-end (104) may have a wider opening designed to receive a screw's head, thereby enabling complete insertion of the screw into the anchor and avoiding outwardly extension of the screw from the wall. Notably, this feature is optional and the axial threaded recess (102) may have the same diameter all across the anchor (100) (as seen in Fig. 3). Also shown in Fig. 1A, is a pointy area at the end of the axial threaded recess (102) designed to receive the (pointy) tip of a screw. Again, when using blunt-ended screws, this pointy end is not necessary.

Fig. 2 illustrates one possible configuration of the anchor of the invention, providing an example angle of the piercing distal end faces (103). As illustrated, the piercing distal-end (103) may have an angle of between about 1° to about 89°, wherein the larger the angle is, the easier penetration of the anchor (100) into the wall is. For home appliance use - a and preferably around 60° angle can be used, as shown in the figure.

Fig. 3 illustrates a side view of an embodiment of the present invention in which the faces (103) of the body and the faces of the piercing head of the wall anchor (100) are not parallel, and there is not the same number of faces to these two parts of the anchor (also the case for Fig. 4A)

Figs. 4A-4D illustrate more anchor body structures: such as octagonal prism (4A) side by side to embodiments in which the faces (103) are oriented as star shaped or an embodiment in which not all faces are flat, but rather dome are concave.

Insubstantial changes from the claimed subject matter as viewed by a person with ordinary skill in the art, now known or later devised, are expressly contemplated as being equivalently within the scope of the claims. Therefore, obvious substitutions now or later known to one with ordinary skill in the art are defined to be within the scope of the defined elements.

The claims are thus to be understood to include what is specifically illustrated and described above, what is conceptually equivalent, what can be obviously substituted and also what essentially incorporates the essential idea of the invention.

Although the invention has been described in detail, nevertheless changes and modifications, which do not depart from the teachings of the present invention, will be evident to those skilled in the art. Such changes and modifications are deemed to come within the purview of the present invention and the appended claims.

### Examples

**Example 1:** Example 1: A 3.5 mm steel rod has been machined to the shape of the product (as in Figs. 4A and 4B). with a total length of 9.15 mm. During the machining it got internal 2M thread for receiving a screw. The width/diameter of the anchor in the open proximal-end (104) is 3.5 mm and is reducing in diameter in a mild 2.5-degree angle. The piercing distal-end (103) has a 65-degree angle to penetrate the wall. The piercing distal end has 4 faces, and the body portion of the anchor has 8 faces (101). The wall anchor was inserted into an autoclaved aerated concrete 'brick' wall, using a 3cm long and 1cm wide steel holder (105) and hammering with a 1Kg hammer.

**Example 2:** An aluminum alloy rod can be similarly processed to make an anchor of the present invention. The dimensionalities of which may be: Length: 30mm; Width: 5mm; Length of internal bore/recess: 10mm, width of internal bore/recess: 2mm. Number of faces (101) for the body of the anchor: 12, number of faces for the piercing distal end: 6. The anchor also includes a widened recess for holding a screw head.

**Example 3:** To anchor for use in mountain climbing - a titanium anchor; the dimensionalities of which may be: Length: 80mm; Width: 15mm; Length of internal bore/recess: 40mm, width of internal bore/recess: 8mm. Number of faces (101) for the body of the anchor: 8 and as in Fig 4D, number of faces for the piercing distal end: 8. The anchor may provide for attaching a removable grip attached to a fixed location, which may be repeatedly and easily removed and returned for modes of climbing practice.

## Claims

1. A single-piece self-penetrating wall anchor (100) for anchoring an article to a hard-wall, said wall anchor (100) comprising a rigid body having:
(i) an outer wall(s) (101);
(ii) a piercing distal-end (103) for penetrating into said wall without prior drilling; and
(iii) an open proximal-end (104) leading to an axial threaded recess (102) for receiving a screw,
wherein said rigid body is non-deformable and having a hardness of at least 40 HRC (Hardness Rockwell C), such as that is does not change in shape upon insertion into a concrete/brick wall, and/or upon receiving a screw into said axial threaded recess (102).

2. The wall anchor (100) of claim 1, wherein said outer wall (101) has faces, useful to prevent the rotation of said anchor (100) when said screw in fixed into said axial threaded recess (102).

3. The wall anchor (100) of claim 2, wherein said piercing distal-end (103) has faces.

4. The wall anchor (100) of any one of claims 1-3, wherein said open proximal-end (104) is headless.

5. The wall anchor (100) of claim 1, wherein the rigid body further comprises:
(iv) means of preventing rotation of said anchor (100) in said wall, such as faces, or protrusions.

6. A method for anchoring an object to a hard-wall, the method comprising:
a) hammering the self-penetrating wall anchor (100) of any one of claims 1-5 into said wall; and
b) screwing a screw into said wall anchor (100), thereby anchoring said object to said wall.

7. The method of claim 6, wherein step (a) comprises holding said self-penetrating wall anchor (100) onto said hard-wall using a rigid caveated holder (105) and hammering on said holder (105) to insert the anchor (100) into said wall.

## Patentansprüche

1. Ein einstückiger, selbsteindringender Wandanker (100) zum Verankern eines Gegenstands an einer harten Wand, wobei der genannte Wandanker (100) einen starren Körper umfasst, der Folgendes aufweist:
(i) eine oder mehrere Außenwände (101);
(ii) ein eindringendes distales Ende (103) zum Eindringen in die genannte Wand ohne vorheriges Bohren; und
(iii) ein offenes proximales Ende (104), das zu einer axialen Gewindeausnehmung (102) zur Aufnahme einer Schraube führt,
wobei der genannte starre Körper nicht verformbar ist und eine Härte von mindestens 40 HRC (Rockwell-Härte C) aufweist, so dass er seine Form beim Einsetzen in eine Beton-/Ziegelwand und/oder bei Aufnahme einer Schraube in die axiale Gewindeausnehmung (102) nicht verändert.

2. Der Wandanker (100) nach Anspruch 1, wobei die genannte Außenwand (101) Flächen aufweist, die nützlich sind, um die Drehung des Ankers (100) zu verhindern, wenn die Schraube in der genannten axialen Gewindeausnehmung (102) befestigt wird.

3. Der Wandanker (100) nach Anspruch 2, wobei das genannte eindringende distale Ende (103) Flächen aufweist.

4. Der Wandanker (100) nach einem der Ansprüche 1-3, wobei das genannte offene proximale Ende (104) kopflos ist.

5. Der Wandanker (100) nach Anspruch 1, wobei der starre Körper ferner umfasst:
(iv) Mittel zum Verhindern einer Drehung des genannten Ankers (100) in der genannten Wand, wie beispielsweise Flächen oder Vorsprünge.

6. Ein Verfahren zum Verankern eines Objekts an einer harten Wand, wobei das Verfahren umfasst:
a) Hämmern des selbsteindringenden Wandankers (100) nach einem der Ansprüche 1-5 in die Wand; und
b) Schrauben einer Schraube in den Wandanker (100), wodurch das genannte Objekt an der Wand verankert wird.

7. Das Verfahren nach Anspruch 6, wobei Schritt (a) das Halten des genannten selbsteindringenden Wandankers (100) an der harten Wand unter Verwendung eines starren, mit einer Ausnehmung versehenen Halters (105) und das Hämmern auf den genannten Halter (105) umfasst, um den Anker (100) in die genannte Wand einzusetzen.

## Revendications

1. Un ancrage mural auto-perçant (100) monobloc pour ancrer un article à un mur dur, ledit ancrage mural (100) comprenant un corps rigide ayant :
(i) une ou plusieurs paroi(s) extérieure(s) (101) ;
(ii) une extrémité distale perçante (103) pour pénétrer dans ledit mur sans perçage préalable ; et
(iii) une extrémité proximale ouverte (104) menant à un logement taraudé axial (102) pour recevoir une vis,
dans lequel ledit corps rigide est non déformable et ayant une dureté d'au moins 40 HRC (dureté Rockwell C), de sorte qu'il ne change pas de forme lors de son insertion dans un mur en béton/brique et/ou lors de l'introduction d'une vis dans ledit logement taraudé axial (102).

2. L'ancrage mural (100) selon la revendication 1, dans lequel ladite paroi extérieure (101) a des faces, utiles pour empêcher la rotation dudit ancrage (100) lorsque ladite vis est vissée dans ledit logement taraudé axial (102).

3. L'ancrage mural (100) selon la revendication 2, dans lequel ladite extrémité distale perçante (103) a des faces.

4. L'ancrage mural (100) selon l'une quelconque des revendications 1-3, dans lequel ladite extrémité proximale ouverte (104) est dépourvue de tête.

5. L'ancrage mural (100) selon la revendication 1, dans lequel le corps rigide comprend en outre :
(iv) des moyens pour empêcher la rotation dudit ancrage (100) dans ledit mur, tels que des faces ou des saillies.

6. Un procédé de fixation d'un objet à un mur dur, le procédé comprenant :
a) marteler l'ancrage mural auto-perçant (100) selon l'une quelconque des revendications 1-5 dans ledit mur ; et
b) visser une vis dans ledit ancrage mural (100), fixant ainsi ledit objet audit mur.

7. Le procédé selon la revendication 6, dans lequel l'étape (a) comprend le maintien dudit ancrage mural auto-perçant (100) sur ledit mur dur au moyen d'un porte-pièce rigide évidé (105) et le martelage dudit porte-pièce (105) afin d'insérer l'ancrage (100) dans ledit mur.
